## Europäisches Patentamt

## European Patent Office

## Office européen des brevets

(11) Publication number: **0 095 299**
**B1**

(12) **EUROPEAN PATENT SPECIFICATION**

(45) Date of publication of patent specification: **09.09.87**

(51) Int. Cl.⁴: **B 32 B 27/32,** B 65 D 65/40, C 08 L 23/08

(21) Application number: **83302759.2**

(22) Date of filing: **16.05.83**

(54) Plastics film and bags and sacks therefrom.

(30) Priority: 20.05.82 GB 8214701
03.06.82 GB 8216239
21.07.82 GB 8221127
03.12.82 GB 8234567

(43) Date of publication of application:
30.11.83 Bulletin 83/48

(45) Publication of the grant of the patent:
09.09.87 Bulletin 87/37

(84) Designated Contracting States:
AT BE CH DE FR GB IT LI LU NL SE

(56) References cited:
EP-A-0 080 198
EP-A-0 109 512
GB-A-2 070 625
GB-A-2 115 348
US-A-4 151 318
US-A-4 303 710

(73) Proprietor: Stiksack STS S.A.
Route Florissant 112
CH-1206 Genève (CH)

(72) Inventor: Cowan, Michael Anthony
Hadham Grange
Much Hadham Hertfordshire (GB)

(74) Representative: Cropp, John Anthony David
et al
MATHYS & SQUIRE 10 Fleet Street
London, EC4Y 1AY (GB)

Courier Press, Leamington Spa, England.

## Description

This invention relates to plastics film and bags and sacks made therefrom.

Plastics bags and sacks, especially those made from polyolefins such as polyethylene, have been known for a long time and because of their physical properties and low cost have largely replaced other materials in a wide variety of end uses, especially as dustbin liners and in the packaging of materials such as fertiliser, peat, etc. However, despite much research, there have been problems in developing a plastics alternative for heavy duty paper sacks, especially the multi-ply paper sacks, pillow sacks or valve sacks e.g. of the kind used for packaging some agricultural and horticultural products, which has an acceptable performance and yet is sufficiently cheap.

US—A—4303710 describes a laminar thermoplastics film construction comprising a layer of low density polyethylene bonded to a layer of a dissimilar polymer blend comprising linear low density polyethylene and high density polyethylene.

EP—A—109512, published 30 May 1984, describes in Example 1 a two-layer stretch/cling film. The two layers are each formed from linear low density polyethylene and one of the layers has been modified by the inclusion of polyisobutylene as a tackifying agent.

According to the present invention, there is provided a thermoplastics bag or sack at least one of the walls of which includes first and second layers each formed by melt extrusion from a synthetic thermoplastics material comprising ethylene polymer, characterised in that the synthetic thermoplastics material from which one of said layers is formed comprises a blend of linear low density ethylene polymer and at least one of (a) a second ethylene polymer which has a density higher than said linear low density ethylene polymer and is selected from ethylene homopolymers and copolymers of ethylene with at least one other α-olefin and (b) polypropylene, and the other of said layers is formed from a synthetic thermoplastics material which is different to that from which said one of said layers is formed and comprises linear low density ethylene polymer, at least one of said layers provides a face of the wall and at least a part of the surface of the outer face of the wall has a surface coefficient of friction which is higher than that of the inner face and which has been increased by virtue of at least one treatment selected from mechanical treatment of the surface, electrical treatment of the surface, application of a friction-increasing additive to the surface and incorporation of a friction-increasing additive into the synthetic thermoplastics material from which the layer providing said surface is formed.

In the simplest form of the bag or sack, the wall will have just the two layers but it may consist of three or more layers in which case the specified two layers preferably provide the two faces of the wall.

In general both of the walls of the bag or sack will have said multi-layer construction but this is not essential because the benefit of the invention can still be obtained when only one of the walls is so constructed provided that all the sacks (or bags) in a stack are arranged with said wall facing in the same direction i.e. either with said wall being the upper wall or with said wall being the underneath wall of all the sacks.

Although the layers of the wall may be separate if desired, they are preferably fused together in which case the wall may be formed in a single operation e.g. by a process such as coextrusion.

Thus, the invention also provides a multi-layer film for manufacture into bags or sacks comprising a laminate having at least two layers each of which is formed by melt extrusion from a synthetic thermoplastics material comprising ethylene polymer, characterised in that the synthetic thermoplastics material from which a first one of said layers is formed comprises a blend of linear low density ethylene polymer and at least one of (a) a second ethylene polymer which has a density higher than said linear low density ethylene polymer and is selected from ethylene homopolymers and copolymers of ethylene with at least one other α-olefin and (b) polypropylene and a second one of said layers is formed from a synthetic thermoplastics material which is different to that from which said first of said layers is formed and comprises linear low density ethylene polymer, at least one of said layers provides a face of said film and at least a part of the surface of one face has a surface coefficient of friction which is higher than that of the other face of the film and which has been increased by virtue of at least one treatment selected from mechanical treatment of the surface, electrical treatment of the surface, application of a friction-increasing additive to the surface and incorporation of a friction-increasing additive into the synthetic thermoplastics material from which the layer providing said surface is formed.

The layers forming the laminate may be thermally fused together while at least one is still in the heat softened state as a result of being melted for extrusion, and preferably the film is made by coextrusion. Coextrusion involves extruding two or more different plastics layers through a common die to produce a multi-layer product in a single step. The plastics materials forming the layers may be extruded through different orifices in the same die, whereby the layers are extruded as separate entities and fuse together downstream of the die, or they may be extruded through the same orifice.

In its simplest form, the film of the present invention will have two layers which will provide the respective inner and outer faces of the wall of a bag or sack made from the film. However, it may contain more than two layers, thus offering the opportunity of further varying the physical properties of the film and of bags or sacks made therefrom.

The film may be flat film extruded from a slot die but preferably it is tubular film, e.g. produced by the blow extrusion process. It is preferred that the surface of the film having the higher surface coefficient of friction is provided by one of the two specified layers. This layer may be discontinuous if desired, e.g. in the form of one or more bands or strips. For example, where the film is tubular film, the or each band or strip may be produced in the machine direction or at an angle thereto whereby a helical pattern is formed.

Bags and sacks according to the invention may be made from the film with the face having the higher surface coefficient of friction providing the outer face of the wall of the bag or sack. The bags and sacks may be formed from the film in known manner and may be of simple sack form or, for example, in the form of pillow sacks or valve sacks.

Linear low density ethylene polymer is ethylene polymer having a density corresponding to that of conventional low density polyethylene, i.e. up to about 0.925 g/cm$^3$ but which has been manufactured by a low pressure process employing a metal-based catalyst such as a Ziegler, Phillips, Union Carbide, Dow or Standard catalyst, and has fewer $CH_3$-groups per 1000 carbon atoms than conventional low density polyethylene made by the high pressure process using a peroxy catalyst. In general, linear low density ethylene polymers contain a small percentage of a second α-olefin as comonomer. Said second α-olefin normally has at least 4 carbon atoms.

In one of the layers, preferably the layer which does not provide the outer face of the bag or sack, linear low density ethylene polymer is employed in admixture with a second polymer. The linear low density polymer is preferably a copolymer of ethylene and an α-olefin having more than four, preferably at least six and most preferably more than seven carbon atoms. Particular examples of such α-olefins are hexene-1, octene-1, and decene-1. The second polymer, which is preferably polyethylene or a copolymer of ethylene with another α-olefin, has a higher density than the linear low density polymer with which it is mixed. In general, said second ethylene polymer will have a density of at least 0.926 g/cm$^3$ and may be selected from so-called medium density polymers, having a density in the range 0.926—0.940, and high density polymers, having a density in the range 0.941—0.965 or possibly even higher. Preferably it has a density in the range 0.930—0.945 g/cm$^3$.

To obtain the optimum combination of properties in the bag or sack, especially of puncture resistance, tear strength, elasticity and tensile strength, it is preferred that the blend of the two polymers has a density in the range about 0.914 to about 0.937, more preferably about 0.920 to about 0.935 and most preferably about 0.923 to about 0.930 g/cm$^3$, when determined from the following equation:

$$\rho = A\rho^A + B\rho^B$$

where $\rho$ is the density of the blend and $\rho^A$ and $\rho^B$ are the densities of the linear low density polymer and the other polymer respectively, and A and B are the fractions of each of these polymers employed in the blend. Thus, the higher the density of the second polymer, the less of it should be used in the blend.

Alternatively, the second polymer in the blend may comprise polypropylene or a mixture of polypropylene and a polyethylene or ethylene/α-olefin copolymer having a density greater than that of the linear low density ethylene polymer. Where polypropylene or said mixture is present and the layers are produced in fused form by coextrusion, it is preferred that the linear low density ethylene polymer forms at least 25% by weight of the blend and the polypropylene is preferred to form not more than 25%, and more preferably not more than 10% by weight, of the blend.

If desired, the blend may include minor amounts of other compatible polymeric materials e.g. low density polyethylene or ethylene copolymer, e.g. ethylene/vinyl acetate copolymer, although in general the inclusion of such materials is not believed to provide any benefit and in amounts greater than about 20—25% of the blend, by weight, they may cause curling when the layers are produced in fused form by coextrusion. In any event, any such additional polymeric material must be capable of being processed at the temperatures required for extruding the blends when coextrusion is employed.

The other layer, which is preferably that which provides the outer face of the bag or sack, comprises linear low density ethylene polymer. For best results it is preferred that the density thereof is in the range 0.916 to 0.925, more preferably 0.918 to 0.922 g/cm$^3$. It may also include a minor amount of other compatible plastics material, e.g. low or high density ethylene polymer or copolymer; however no advantage seems to be gained thereby.

The increased coefficient of friction of the outer face of the sack or bag is achieved by mechanical and/or electrical treatment of the surface, by applying a friction-increasing additive such as a tackifier and/or a rubbery polymer to the surface or, preferably, by incorporating such an additive in the polymer composition employed in the production of the layer providing said outer face. However, where an additive is applied or incorporated it is important that the surface thus obtained is not sticky to the touch since otherwise it will interfere with the subsequent processing of the layer (or of a multi-layer e.g. coextruded film including said layer) e.g. on sack-making machinery, will be unpleasant to manhandle and will attract dirt and dust. It is also necessary, where the additive is incorporated in the composition, for said additive to be processable at the temperature required for extruding the thermoplastics layer in which is it incorporated. Preferably, the required increase in friction coefficient is achieved by including in the composition from which the layer providing the surface is formed a polymeric component which has blocking properties. Examples of preferred such polymers are generally amorphous polymers of olefins having at least three carbon atoms, especially isobutylene polymers such as polyisobutylene.

Surprisingly, having regard to the syrupy nature of such polymers, which would be expected to result in a surface which would be sticky to the touch, attract dust, and impossible to handle on automatic machinery, particularly good results are obtained using isobutylene polymers having a molecular weight $M_w$ (polyethylene equivalent) in the range of about 500 to a few thousand, e.g. up to about 3000 or 5000.

Satisfactory results are obtained from the polymer at concentrations of no more than a few per cent by weight. For example, the preferred isobutylene polymer may be employed in amounts of 0.5 to 10%, preferably 1 to 8%, more preferably 2 to 6% and most preferably 2.5 to 5%, by weight based on the thermoplastics material forming the layer in which the additive polymer is incorporated.

Preferably, the additive is employed in an amount to obtain a coefficient of friction, determined by ASTM test D—1894 (static test), of at least 0.8, preferably at least 0.85 and most preferably at least 0.87.

While the polymer compositions employed to form the two layers may also contain other additives conventionally employed with ethylene polymers, e.g. pigments, antioxidants and u.v. stabilisers, it is particularly advantageous where one of said layers provides the inner face of the bag or sack for the composition employed for that layer to include a slip additive so as to reduce the surface coefficient of friction, as measured by ASTM D—1894 (static test), preferably to less than 0.5, more preferably less than 0.3. The bags and sacks thereby obtained are easier to fill.

In one embodiment of the invention, which is particularly desirable where the bags or sacks are to hold living horticultural produce, e.g. seeds, bulbs or corms, at least one of the layers of the wall contains an infra-red and/or ultra-violet absorber, e.g. carbon black, to inhibit premature sprouting. Preferably, the inner layer (or, where the bag or sack comprises more than two layers, an inner layer) is thus modified, thereby permitting the outer layer to be distinctively coloured e.g. for identification purposes or for appearance.

While it has been found that the bag or sack of the invention may be stitched using essentially the same automatic equivalent as is conventionally used with paper sacks it may be found advantageous to coat the area of the outer face of the wall to be contacted by stitching or automatic bag handling machinery e.g. the shoe of a sewingmachine, with a band of material having a lower coefficent of friction than said outer face. The coating may be applied to the bag or sack or to the appropriate face of a film from which the bag or sack is to be formed. One convenient method of achieving this is to coat the area in question with a band of printing ink since this may be done simultaneously with the printing of any desired legend on the face of the bag, sack or film.

Bags and sacks according to the invention exhibit a combination of puncture resistance, tear strength, burst strength, tensile strength and low-slip outer surface that enables them to be employed as acceptable substitutes for heavy duty paper sacks including multi-ply sacks and provides them with a stacking capability which can exceed that of the paper sacks. Particularly good results are obtained when the bags or sacks are made from the multi-layer film of the invention, especially when the film has been produced by coextrusion. Such bags and sacks stack better than paper sacks and have higher resistance to water penetration, improved printability and better inhibition of the germination of seed products packed in them; can be stitched like paper sacks or heated sealed, and can be stored outside.

The bags and sacks or the films employed in their production may be microperforated in known manner e.g. for applications where otherwise the materials stored in them would sweat. They may also be provided with liners, if desired, and the liners may be plastics or some other material e.g. paper.

The overall thickness of the wall of the bag or sack and the ratios of the thicknesses of the individual layers may be chosen in accordance with the intended end-use. In general, the overall wall thickness will be in the range 25 to 200 μm with thicknesses of at least 140—150 μm generally being required for heavy duty use. The ratios of thicknesses of the layers formed from the linear low density polymer and the layer formed from the blend will generally lie in the range 25:75 to 50:50 with the higher values for the first mentioned layer within this range being preferred for the thinner overall wall thicknesses.

By way of particular Example, black sacks were made from tubular film having an overall thickness of about 150 μm and formed by the blow coextrusion of a first composition which contained a slip agent and carbon black and the polymeric component of which comprised a blend having a density (calculated as described herein) of 0.9245 and comprising 25% by weight of an ethylene copolymer containing about 1.2 mole % hexene-1, having a density of 0.938 and marketed by Petrofina as FINA HR 501 and 75% by weight of a linear low density ethylene copolymer containing abut 3 mole % octene-1, having a density of 0.920 and marketed by Dow Chemicals as DOWLEX 2045, which composition formed the inner layer of the tube; and a second composition the polymeric component of which was marketed by UNIFOS as UNIFOS 8006 and comprised a blend of (a) a linear low density ethylene copolymer containing about 3 mole % of butene-1 and (b) about 4% by weight of isobutylene polymer having a molecular weight $M_w$ (polyethylene equivalent) in the region of about 1000 to 2000 and a broad molecular weight spread of from about 300 to 3000, which composition formed the outer layer with a thickness of about 38 μm. The sacks were found to be suitable as replacements for multi-ply paper sacks for the packaging of e.g. fertiliser and seeds in 25 kg loads. ("FINA", "DOWLEX" and "UNIFOS" may be registered trade marks in one or more of the designated states).

In order to obtain a sack having similar properties of bursting strength, yield strength and tear-resistance from low density polyethylene, it was found necessary for the sack to have a wall thickness of 200—250 μm; i.e. requiring 33% increase or more in the material required. Moreover, the surface of the conventional sack had a coefficient of friction of about 0.5 to 0.6 whereas in sacks made in accordance with the present invention, the value for the outer surface was about 0.85 to 0.87, giving much improved stackability. The coefficient of friction of the inner surface, on the other hand, was below 0.5, thereby facilitating filling of the sack.

A 1.02 m × 1.22 m (40" × 48") pallet was loaded with 1 tonne of produce packed into 40 sacks stacked in 8 layers of 5 sacks per layer. Using the sacks of the invention, the stack was still stable after tipping the pallet about one of its 1.22 m (48") edges until the opposite edge was more than 51 cm (20") off the ground. When low density polyethylene sacks were used, the stack collapsed before a tipping height of 43 cm (17") and usually substantially less than 43 cm (17"), could be achieved.

There was no evidence of deterioration of the frictional properties or of stickiness developing in the surface of the sacks of the invention even after several months storage.

A method of forming a valve bag in accordance with the invention is now described with the aid of the accompanying drawings in which

Figure 1 is an elevational view of a bag made from a single ply of film,

Figure 2 is a sectional view along line A—A of Figure 1,

Figure 3 shows a modification of the bag of Figure 2,

Figure 4 is a view corresponding to that of Figure 2 but of a different form of bag, and

Figure 5 is a view corresponding to that of Figure 2 of a bag similar in construction to that of Figures 1 and 2 but formed from two separate plies.

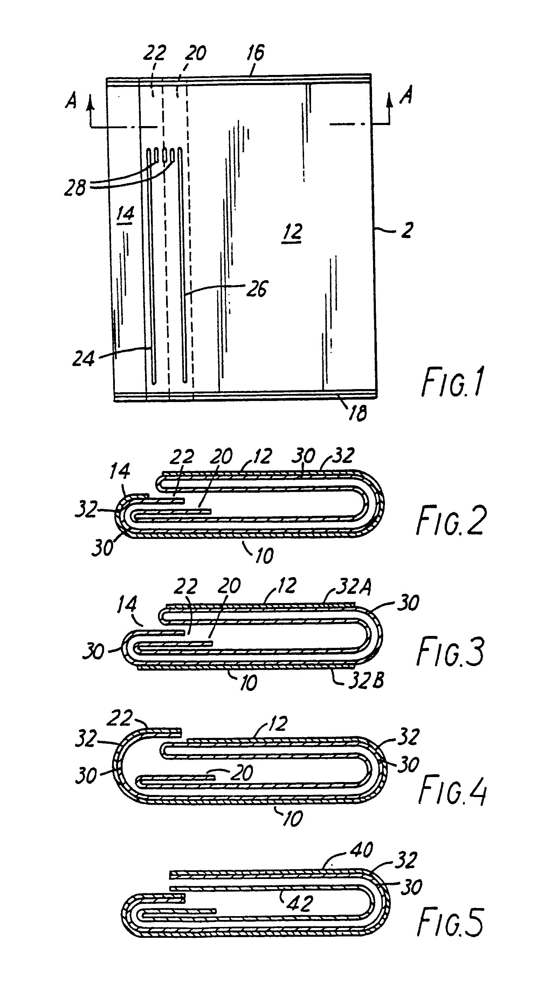

Referring to Figures 1 and 2, the bag 2 has a two-ply back wall 10 and a front wall made of two-ply partially overlapping panels 12 and 14 which are integral with the back wall whereby to form therewith a flattened two-ply tube which is closed at both ends by transverse seals 16 and 18. Panel 14 lies beneath panel 12 in the area of overlap and the free edge of its inner ply 20 projects a short distance beyond the free edge of its outer ply 22. A seal 24 unites both plies of panel 14 with the two plies of panel 12 and a seal 26 unites the projecting end of ply 20 with the two plies of panel 12. The portion left unsealed in the common area of overlap at the top end of the bag forms a tubular valve sleeve which is delineated by the top ends of seals 24 and 26 together with seals 28. The projecting end portion of inner ply 20 acts as a closing flap when the bag has been filled.

It will be understood that in an alternative embodiment, outer ply 22 may project beyond inner ply 20. Furthermore, seal 26 is not essential and seals 28 may be replaced by a continuous seal. In yet another embodiment, illustrated in Figure 4, outer ply 22 can extend over panel 12 instead of beneath it; in other words the portion of panel 12 which overlaps panel 14 lies between plies 20 and 22.

The bag is formed by folding and sealing a flat film or folded slit tubular film only part of the width of which is provided, over at least a part of one surface thereof, with a face having a higher surface coefficient of friction than the other face of the film, said part of the width being that which provides the external faces of the walls of the bag. That part of the width of the film which provides the inner surfaces of the bag is not provided with such a face. Thus, in the embodiment illustrated in Figures 1 and 2 the bag is formed from a film which comprises a first layer 30 which is one of the two specified layers of this invention, and a second layer 32 which is the other of the two specified layers of the invention and is in the form of a band which covers that part of the width of said first layer which provides the external faces of walls 10, 12 and 14 of the bag. This band is formed from a composition containing an additive such as isobutylene polymer which increases the surface coefficient of friction of the layer. Preferably said first layer 30 is formed from the polymer blend.

Not all of the width of the first layer which provides the external faces of the bag need be provided with said face of higher surface friction coefficient. For example, as illustrated in Figure 3, said face may comprise two separate bands 32A and 32B of the second layer 32, which bands provide the external faces of panels 10 and 12, respectively.

In the embodiment illustrated in Figure 5, the bag of Figures 1 and 2 is formed instead from two plies 40 and 42 at least the outer ply 40 being a multilayer film of this invention with first layer 30 and second layer 32 with the outwardly facing surface being the surface with the higher coefficient of friction. The inner ply 42 may comprise the same film, in which case the surface having the lower coefficient of friction preferably faces inwards whereby to form the inner face of the bag, or, as shown in Figure 5, it may comprise a different film provided it can be sealed, e.g. by heat sealing, to the outer ply 40.

**Claims**

1. A thermoplastic bag or sack at least one of the walls of which includes first and second layers each formed by melt extrusion from a synthetic thermoplastics material comprising ethylene polymer, characterised in that

the synthetic thermoplastics material from which one of said layers is formed comprises a blend of linear low density ethylene polymer and at least one of

(a) a second ethylene polymer which has a density higher than said linear low density ethylene polymer and is selected from ethylene homopolymers and copolymers of ethylene with at least one other α-olefin and

(b) polypropylene, and

the other of said layers is formed from a synthetic thermoplastics material which is different to that from which said one of said layers is formed and comprises linear low density ethylene polymer;

at least one of said layers provides a face of the wall and at least a part of the surface of the outer face of the wall has a surface coefficient of friction which is higher than that of the inner face and which has been increased by virtue of at least one treatment selected from mechanical treatment of the surface, electrical treatment of the surface, application of a friction-increasing additive to the surface and incorporation of a friction-increasing additive into the synthetic thermoplastics material from which the layer providing said surface is formed.

2. A bag or sack as claimed in claim 1 in which the layers of the wall are fused together.

3. A bag or sack as claimed in claim 2 in which the wall is formed from coextruded plastics film.

4. A bag or sack as claimed in any one of claims 1 to 3 in which said other of said layers is the outer layer.

5. A bag or sack as claimed in any one of claims 1 to 4 in which said linear low density ethylene polymer of said other of said layers has a density in the range 0.916 to 0.925 g/cm³.

6. A bag or sack as claimed in any one of claims 1 to 4 in which said linear low density ethylene polymer of said other of said layers has a density in the range 0.918 to 0.922 g/cm³.

7. A bag or sack as claimed in any one of claims 1 to 6 in which the coefficient of friction of the outer face of the wall is at least 0.8 as determined by ASTM D—1894 (static test).

8. A bag or sack as claimed in claim 7 in which the coefficient of friction of the outer face of the wall is at least 0.85.

9. A bag or sack as claimed in claim 8 in which the coefficient of friction of the outer face of the wall is at least 0.87.

10. A bag or sack as claimed in any one of claims 1 to 9 in which said one of said layers forms the innermost layer.

11. A bag or sack as claimed in any one of claims 1 to 10 in which the linear low density ethylene polymer employed in the blend is a copolymer of ethylene and an α-olefin having more than 4 carbon atoms.

12. A bag or sack as claimed in any one of claims 1 to 11 in which the blend comprises linear low density ethylene polymer and a second ethylene polymer which has a higher density.

13. A bag or sack as claimed in claim 12 in which said second polymer has a density in the range 0.930 to 0.935 g/cm³.

14. A bag or sack as claimed in claim 11, 12 or 13 in which the blend has a density in the range of about 0.914 to about 0.937 g/cm³.

15. A bag or sack as claimed in claim 14 in which the blend has a density in the range of about 0.920 to about 0.935 g/cm³.

16. A bag or sack as claimed in claim 15 in which the blend has a density in the range of about 0.923 to about 0.930 g/cm³.

17. A bag or sack as claimed in any one of claims 1 to 16 in which the inner face of the wall has a coefficient of friction, as determined by ASTM D—1894 (static test) of less than 0.5.

18. A bag or sack as claimed in any one of claims 1 to 17 which is a valve bag.

19. A multi-layer film for manufacture into bags or sacks comprising a laminate having at least two layers each of which is formed by melt extrusion from a synthetic thermoplastics material comprising ethylene polymer, characterised in that

the synthetic thermoplastics material from which a first one of said layers is formed comprises a blend of linear low density ethylene polymer and at least one of

(a) a second ethylene polymer which has a density higher than said linear low density ethylene polymer and is selected from ethylene homopolymers and copolymers of ethylene with at least one other α-olefin and

(b) polypropylene and

a second one of said layers is formed from a synthetic thermoplastics material which is different to that from which said first of said layers is formed and comprises linear low density ethylene polymer;

at least one of said layers provides a face of said film and at least a part of the surface of one face has a surface coefficient of friction which is higher than that of the other face of the film and which has been increased by virtue of at least one treatment selected from mechanical treatment of the surface, electrical treatment of the surface, application of a friction-increasing additive to the surface and incorporation of a friction-increasing additive into the synthetic thermoplastics material from which the layer providing said surface is formed.

20. A multi-layer film as claimed in claim 19 which has been formed by coextrusion.

21. A multi-layer film as claimed in claim 20 which has been formed by blow-extrusion.

22. A multi-layer film as claimed in any one of claims 19 to 21 wherein said first and second layers provide the faces of the film.

23. A multi-layer film as claimed in any one of claims 19 to 22 wherein in said second one of said layers the linear low density ethylene polymer has a density as specified in claim 5 or claim 6.

24. A multi-layer film as claimed in any one of claims 19 to 23 in which said second one of said layers provides the face of the film having the higher surface coefficient of friction.

25. A multi-layer film as claimed in claim 24 in which said coefficient of friction is as specified in any one of claims 7 to 9.

26. A multi-layer film as claimed in any one of claims 19 to 25 in which the blend is as defined in any one of claims 11 to 16.

27. A multi-layer film as claimed in claim 24, claim 25 or claim 26 in which the layer which comprises said blend forms the face of the film having the lower surface coefficient of friction.

**Patentansprüche**

1. Sack oder Tasche aus thermoplastischem Material wobei zumindest eine Wand eine erste und zweite Schicht enthält, die durch Schmelz-extrudieren aus einem synthetischen, thermo-plastischen Material, das Ethylenpolymer ent-hält, gebildet wird dadurch gekennzeichnet, daß das synthetische thermoplastische Material aus dem eine der Schichten gebildet wird, eine Mischung enthält, die aus einem linearen Ethylenpolymer niedriger Dichte und zumindest einem Bestandteil von

a) einem zweiten Ethylenpolymer, das eine höhere Dichte als das lineare Ethylenpolymer niedriger Dichte besitzt und aus Ethylenhomopolymeren und Copolymeren von Ethylen mit zumindest einem anderen α-Olefin und

b) Polypropylen ausgewählt ist, besteht und die andere der Schichten aus einem synthetischen, thermoplastischen Material, das von dem aus dem die eine dieser Schichten gebildet wird, verschieden ist und ein lineares Ethylenpolymer niedriger Dichte enthält;

wobei zumindest eine der Schichten eine Wand-außenseite ergibt und zumindest ein Teil der Oberfläche der äußeren Oberfläche der Wand eine Oberflächenreibungskoeffizienten besitzt, der höher ist als jener der inneren Oberfläche und der mittels zumindest einer Behandlung ausgewählt aus einer mechanischen Behandlung der Oberfläche, elektrischen Behandlung der Oberfläche, Aufbringen eines reibungserhöhenden Zusatzstoffes auf die Ober-fläche und Beimengung eines reibungserhöhen-den Zusatzstoffes zum synthetischen thermopla-stischen Material aus dem die Schicht, die diese Oberfläche ergibt, gebildet wird, erhöht wurde.

2. Sack oder Tasche nach Anspruch 1 worin die Schichten der Wand miteinander verschmolzen werden.

3. Sack oder Tasche nach Anspruch 2 worin die Wand durch eine coextrudierte Kunststoffolie gebildet wird.

4. Sack oder Tasche nach einem der Ansprüche 1 bis 3 worin die andere Schicht der Schichten die äußere Schicht ist.

5. Sack oder Tasche nach einem der Ansprüche 1 bis 4 worin das lineare Ethylenpolymer niedriger Dichte der anderen Schicht dieser Schichten eine Dichte im Bereich von 0,916 bis 0,925 g/cm³ aufweist.

6. Sack oder Tasche nach einem der Ansprüche 1 bis 4 worin das lineare Ethylenpolymer niedriger Dichte der anderen der Schichten eine Dichte im Bereich von 0,918 bis 0,922 g/cm³ aufweist.

7. Sack oder Tasche nach einem der Ansprüche 1 bis 6 worin der Reibungskoeffizient der äußeren Oberfläche der Wand mindestens 0,8, gemessen durch ASTM D—1894 (statischer Test), beträgt.

8. Sack oder Tasche nach Anspruch 7 worin der Reibungskoeffizient der äußeren Oberfläche der Wand mindestens 0,85 beträgt.

9. Sack oder Tasche nach Anspruch 8 worin der Reibungskoeffizient der äußeren Oberfläche der Wand mindestens 0,87 beträgt.

10. Sack der Tasche nach einem der Ansprüche 1 bis 9 worin die eine der Schichten die innerste Schicht bildet.

11. Sack oder Tasche nach einem der Ansprüche 1 bis 10 worin das lineare Ethylenpolymer niedriger Dichte das in der Mischung verwendet wird, ein Copolymer von Ethylen und einem α-Olefin mit mehr als 4 Kohlenstoffatomen ist.

12. Sack oder Tasche nach einem der Ansprüche 1 bis 11 worin die Mischung ein lineares Ethylenpolymer niedriger Dichte und ein zweites Ethylenpolymer mit einer höheren Dichte enthält.

13. Sack oder Tasche nach Anspruch 12 worin das zweite Polymer eine Dichte im Bereich von 0,930 bis 0,935 g/cm³ aufweist.

14. Sack oder Tasche nach Anspruch 11, 12 oder 13 worin die Mischung eine Dichte im Bereich von etwa 0,914 bis etwa 0,937 g/cm³ aufweist.

15. Sack oder Tasche nach Anspruch 14 worin die Mischung eine Dichte im Bereich von etwa 0,920 bis etwa 0,935 g/cm³ aufweist.

16. Sack oder Tasche nach Anspruch 15 worin die Mischung eine Dichte im Bereich von etwa 0,923 bis etwa 0,930 g/cm³ aufweist.

17. Sack oder Tasche nach einem der Ansprüche 1 bis 16 worin die innere Oberfläche der Wand einen Reibungskoeffizienten, bestimmt mit ASTM D—1894 (statischer Test), von weniger als 0,5 aufweist.

18. Sack oder Tasche nach einem der Ansprüche 1 bis 17 welche ein Ventilbeutel ist.

19. Mehrschichtfolie zur Herstellung von Säcken oder Taschen enthaltend ein Laminat das zumindest zwei Schichten aufweist, wobei jede Schicht durch Schmelzextrudierung aus einem synthetischen, thermoplastischen Material, das Ethylenpolymer enthält, hergestellt wird, dadurch gekennzeichnet, daß das synthetische, thermoplastische Material aus dem eine erste dieser Schichten hergestellt wird, eine Mischung aus einem linearen Ethylenpolymer niedriger Dichte und mindestens einem Bestandteil von

a) einem zweiten Ethylenpolymer, das eine höhere Dichte als das lineare Ethylenpolymer niedriger Dichte besitzt und aus Ethylenhomopolymeren und Copolymeren von Ethylen mit zumindest einem anderen α-Olefin und

b) Polypropylen ausgewählt ist, besteht und eine zweite Schicht aus einem synthetischen, thermoplastischen Material, das von dem aus dem die eine dieser Schichten gebildet wird, verschieden ist und ein lineares Ethylenpolymer niedriger Dichte enthält, gebildet wird;

wobei zumindest eine der Schichten eine Wandaußenseite ergibt und zumindest ein Teil der Oberfläche der äußeren Oberfläche der Wand einen Oberflächenreibungskoeffizienten besitzt, der höher ist als jener der inneren Oberfläche und der mittels zumindest einer Behandlung ausgewählt aus einer mechanischen Behandlung der Oberfläche, elektrischen Behandlung der Oberfläche, Aufbringen eines reibungserhöhenden Zusatzstoffes auf die Oberfläche und Beimengung eines reibungserhöhenden Zusatzstoffes zum synthetischen thermoplastischen Material aus dem die Schicht, die diese Oberfläche ergibt, gebildet wird, erhöht wurde.

20. Mehrschichtfolie nach Anspruch 19 die durch Coextrusion hergestellt wurde.

21. Mehrschichtfolie nach Anspruch 20 die durch Blasextrusion hergestellt wurde.

22. Mehrschichtfolie nach einem der Ansprüche 19 bis 21 worin die ersten und zweiten Schichten die Oberfläche der Folie ergeben.

23. Mehrschichtfolie nach einem der Ansprüche 19 bis 22 worin in der zweiten der Schichten das lineare Ethylenpolymer niedriger Dichte eine Dichte, wie in Anspruch 5 oder 6 spezifiziert, aufweist.

24. Mehrschichtfolie nach einem der Ansprüche 19 bis 23 worin die zweite der Schichten die Oberfläche der Folie mit dem höheren Oberflächenreibungskoeffizienten ergibt.

25. Mehrschichtfolie nach Anspruch 24 worin der Reibungskoeffizient den in einem der Ansprüche 7 bis 9 spezifizierten Wert aufweist.

26. Mehrschichtfolie nach einem der Ansprüche 19 bis 25 worin die Mischung, wie in einem der Ansprüche 11 bis 16 definiert, vorliegt.

27. Mehrschichtfolie nach Anspruch 24, 25 oder 26 worin die Schicht, die die Mischung enthält, die Oberfläche der Folie bildet, die den niedrigeren Oberflächenreibungskoeffizient aufweist.

**Revendications**

1. Sac ou poche en matière thermoplastique dont l'une des parois au moins comprend une première couche et une seconde couche formées chacune par extrusion à l'état fondu d'une matière thermoplastique synthétique comprenant un polymère d'éthylène, caractérisé en ce que la matière thermoplastique de synthèse à partir de laquelle l'une des couches est formée, comprend un mélange de polymère d'éthylène linéaire basse densité et d'au moins un polymère parmi,

a) un second polymère d'éthylène qui a une densité supérieure à celle du polymère d'éthylène linéaire basse densité et est choisi parmi des homopolymères d'éthylène et des copolymères d'éthylène avec au moins une autre α-oléfine et,

b) un polypropylène, et

l'autre desdites couches est formée à partir d'une matière thermoplastique de synthèse qui est différente de celle à partir de laquelle l'une des couches est formée et comprend un polymère d'éthylène linéaire basse densité' l'une au moins desdites couches fournit une face de la paroi et une partie au moins de la surface de la face extérieure de la paroi a un coefficient de frottement de surface qui est supérieur à celui de la face intérieure et qui a été augmenté grâce à au moins un traitement choisi parmi un traitement mécanique de la surface, un traitement électrique de la surface, l'application d'un additif augmentant le frottement sur la surface et l'incorporation d'un additif augmentant le frottement dans la matière thermoplastique de synthèse à partir de laquelle la couche fournissant cette surface est formée.

2. Sac ou poche suivant la revendication 1, dans lequel les couches de la paroi sont réunies par fusion.

3. Sac ou poche suivant la revendication 2, dans lequel la paroi est formée à partir d'un film de matière plastique coextrudé.

4. Sac ou poche suivant l'une quelconque des revendications 1 à 3, dans lequel l'autre desdites couches est la couche extérieure.

5. Sac ou poche suivant l'une quelconque des revendications 1 à 4, dans lequel ledit polymère d'éthylène linéaire basse densité de l'autre desdites couches a une densité dans la gamme de 0,916 à 0,925 g/cm$^3$.

6. Sac ou poche suivant l'une quelconque des revendications 1 à 4, dans lequel ledit polymère d'éthylène linéaire basse densité de l'autre desdites couches a une densité dans la gamme de 0,918 à 0,922 g/cm$^3$.

7. Sac ou poche suivant l'une quelconque des revendications 1 à 6, dans lequel le coefficient de frottement de la face extérieure de la paroi est d'au moins 0,8, tel qu'il est déterminé par la norme ASTM D—1894 (test statique).

8. Sac ou poche suivant la revendication 7 dans lequel le coefficient de frottement de la face extérieure de la paroi est d'au moins 0,85.

9. Sac ou poche suivant la revendication 8, dans lequel le coefficient de frottement de la face extérieure de la paroi est d'au moins 0,87.

10. Sac ou poche suivant l'une quelconque des revendications 1 à 9, dans lequel l'une desdites couches forme la couche la plus à l'intérieur.

11. Sac ou poche suivant l'une quelconque des revendications 1 à 10, dans lequel le polymère d'éthylène linéaire basse densité employé dans le mélange est un copolymère d'éthylène et d'une α-oléfine ayant plus de 4 atomes de carbone.

12. Sac ou poche suivant l'une quelconque des revendications 1 à 11, dans lequel le mélange comprend un polymère d'éthylène linéaire basse densité et un second polymère d'éthylène qui a une densité supérieure.

13. Sac ou poche suivant la revendication 12, dans lequel ledit second polymère a une densité dans la gamme de 0,930 à 0,935 g/cm³.

14. Sac ou poche suivant la revendication 11, 12 ou 13, dans lequel le mélange a une desntié dans le gamme d'environ 0,914 à 0,937 g/cm³.

15. Sac ou poche suivant la revendication 14, dans lequel le mélange a une densité dans la gamme d'environ 0,920 à 0,935 g/cm³.

16. Sac ou poche suivant la revendication 15, dans lequel le mélange a une densité dans la gamme d'environ 0,923 à 0,930 g/cm³.

17. Sac ou poche suivant l'une quelconque des revendications 1 à 16, dans lequel la face intérieure de la paroi a un coefficient de frottement, tel que déterminé par la norme ASTM D—1894 (test statique), inférieur à 0,5.

18. Sac ou poche suivant l'une quelconque des revendications 1 à 17, qui est un sac à valve.

19. Film à plusieurs couches pour la fabrication de sacs ou de poches, comprenant un feuilleté ayant au moins deux couches qui sont formées chacune par extrusion à l'état fondu d'une matière thermoplastique synthétique comprenant un polymère d'éthylène, caractérisé en ce que la matière thermoplastique de synthèse à partir de laquelle l'une des couches est formée, comprend un mélange de polymère d'éthylène linéaire basse densité et d'au moins un polymère parmi,

a) un second polymère d'éthylène qui a une densité supérieure à celle du polymère d'éthylène linéaire basse densité et est choisi parmi des homopolymères d'éthylène et des copolymères d'éthylène avec au moins une autre α-oléfine, et

b) un polypropylène, et

une seconde desdites couches est formée à partir d'une matière thermoplastique de synthèse qui est différente de celle à partir de laquelle la première de ces couches est formée et comprend un polymère d'éthylène linéaire basse densité; l'une au moins desdites couches fournit une face du film et une partie au moins de la surface d'une face a un coefficient de frottement de surface qui est supérieur à celui de l'autre face du film et qui a été augmenté grâce à un moins un traitement choisi parmi un traitement mécanique de la surface, un traitement électrique de la surface, l'application d'un additif augmentant le frottement sur la surface et l'incorporation d'un additif augmentant le frottement dans la matière thermoplastique de synthèse à partir de laquelle la couche fournissant cette surface est formée.

20. Film à plusieurs couches suivant la revendication 19 qui a été formé par coextrusion.

21. Film à plusieurs couches suivant la revendication 20, qui a été formé par extrusion avec soufflage.

22. Film à plusieurs couches suivant l'une quelconque des revendications 19 à 21, dans lequel lesdites première et seconde couches fournissent les faces du film.

23. Film à plusieurs couches suivant l'une quelconque des revendications 19 à 22, dans lequel dans ladite secondes desdites couches, le polymère d'éthylène linéaire basse densité a une densité telle que spécifiée dans la revendication 5 ou la revendication 6.

24. Film à plusieurs couches suivant l'une quelconque des revendications 19 à 23, dans lequel ladite seconde desdites couches fournit la face du film ayant le coefficient de frottement de surface le plus élevé.

25. Film à plusieurs couches suivant la revendication 24, dans lequel ledit coefficient de frottement est tel que spécifié dans l'une quelconque des revendications 7 à 9.

26. Film à plusieurs couches suivant l'une quelconque des revendications 19 à 25, dans lequel le mélange est tel que défini dans l'une quelconque des revendications 11 à 16.

27. Film à plusieurs couches suivant la revendication 24, la revendication 25 ou la revendication 26, dans lequel la couche qui comprend ledit mélange forme la face du film ayant le coefficient de frottement de surface le plus bas.

FIG.1

FIG.2

FIG.3

FIG.4

FIG.5